# EUROPEAN PATENT SPECIFICATION

(11) **EP 0 933 284 B1**
(45) Date of publication and mention of the grant of the patent: **31.07.2002**
(21) Application number: 99107935.1
(22) Date of filing: 20.11.1995
(51) Int. Cl.: B62D 5/00, F16H 37/08

(54) **Co-axial gear arrangement**
Koaxiale Getriebeanordnung
Agencement de transmission coaxiale

(43) Date of publication of application: 04.08.1999
(62) Divisional of application: 95937953.8
(73) Proprietor: TOROTRAK (DEVELOPMENT) LIMITED, Leyland, Lancashire PR5 3QW (GB)
(72) Inventor: Greenwood, Christopher John, Leyland, Preston, Lancashire PR5 3WS (GB)
(74) Representative: W.P. Thompson & Co.

(56) References cited:
- EP-A- 0 084 724

## Description

This invention relates to position servo systems, in which the detection of an error between the desired relative positions of actuating (i.e. driving) and driven member causes power to be applied to tend to reduce that error. The invention applies particularly but not exclusively to power-assisted steering systems, of the known general kind in which a steering mechanism - for instance of rack or worm type - is driven by a gear or pinion, typically carried at one end of a shaft, the other end of which carries a steering wheel or other control member. Means are provided to sense torsional deflection in the shaft. When that deflection exceeds a predetermined value, indicating that a substantial steering effort is being applied, an auxiliary source of power is activated and applied to the worm or gear to augment the steering wheel torque, and so reduce the deflection in the shaft.

It has been proposed in Japanese Patent Application 63291770A to incorporate a continuously-variable-ratio transmission ("CVT") of the "variable-ratio-epicyclic" type in a power-assisted steering system. The customary components of such a CVT are an epicyclic gear set and a speed-varying component or "variator", the latter comprising an input member, and intermediate reaction member and an output member. By the "variable-ratio-epicyclic" type of CVT we mean the type in which the axes of rotation of all three of the elements of the variator are concentric, so that the total configuration of the variator bears some resemblence to a conventional geared epicyclic or planetary gear set. The present invention is to be distinguished from the embodiment of JP-A-63291770 principally in that in the system described in that prior publication, the CVT does not generate and transmit any power to assist the steering effort provided by the operator. Instead, the function of the CVT appears to be to vary the manual steering ratio, between the steering wheel and the steering rack to which it is connected, so that quite separate means to generate power assistance receive relatively strong signals at low vehicle speeds and weak ones at high speeds.

The present invention is also of course to be distinguished from the many prior automotive CVT's of concentric arrangement (of which US-A-4922788 shows an example), by the fact that in those CVT's the sole source of motive input has been the prime mover of the automobile. In the position servo systems to which the present invention relates there must be two separate sources of such inputs. For example, in a power steering system a first and manual input is applied via the steering wheel and the CVT must be driven by a second source of motive power in order to contribute the power-assistance that is required.

The present invention is directed to the co-axial aspects of the apparatus illustrated in the present drawings. Accordingly, the present invention as defined by the features of claim 1 provides a transmission having a power input and output which are co-axial along the same axis of rotation, said transmission comprising:
a toroidal drive having two traction disks with at least one reaction path therebetween; and
a co-axial drive having a planetary carrier rotating around the axis of rotation and forms part of said at least one reaction path between said disks.

Advantageously said traction disks react axially along one reaction path therebetween and said carrier forms part of said one reaction path.

Preferably said traction disks react torsionally along one reaction path, and said carrier forms part of said one reaction path.

In a particularly advantageous arrangement said traction disks react axially and torsionally along one reaction path, and said carrier forms part of said one reaction path.

Conveniently, said toroidal drive is a dual cavity toroidal drive, said disks are outboard traction disks which react axially and torsionally along said at least one reaction path, and said carrier forms part of said at least one reaction path.

In one arrangement said co-axial drive has a plurality of elements carried by said carrier, and said elements are operatively adapted to provide a power path between the input and output of said transmission.

In a particular arrangement one of said disks is mounted for rotation with said input; and the co-axial drive comprises a planetary assembly with said rotating planetary carrier forming part of the reaction path between said disks and being interconnected between said one shaft and said toroidal drive, said toroidal drive and said planetary assembly being operatively adapted for allowing power from said input shaft to travel back and forth through said transmission, between said input/ouput and along said substantially the same axis of rotation without the need for parallel shafting.

Preferably, in the transmission of the particular arrangement said toroidal drive and said planetary assembly are operatively adapted for allowing power from said input to be transmitted through said toroidal drive to said planetary assembly along the axis of rotation of said input, and for allowing power from said input to be transmitted through said planetary assembly, then through said toroidal drive and back to said input along the axis of rotation of said input.

Preferably, one of said traction disks is mounted to rotate with said input, and said carrier is operatively adapted to rotate with said input and the other of said traction disks.

In the above arrangement it is preferred that said carrier includes a hub mounted to rotate with said input and a support flange mounted to rotate with the other of said traction disks.

Conveniently, said traction disks and said planetary gear assembly are axially held in position so that relative movement therebetween is substantially only rotational in nature.

Advantageously, the planetary assembly is situated between the two input discs (9a).

The invention will now be described by way of example with reference to the accompanying figures of simplified and partly-schematic drawings in which:-
Figure 1 is a schematic view of a power assisted steering system;
Figure 2 includes a sectional view taken in plane including the shaft 3;
Figure 3 illustrates linkages and movements associated with one of the rollers of the variator, and
Figure 4 shows an alternative to the arrangement shown in Figure 3.

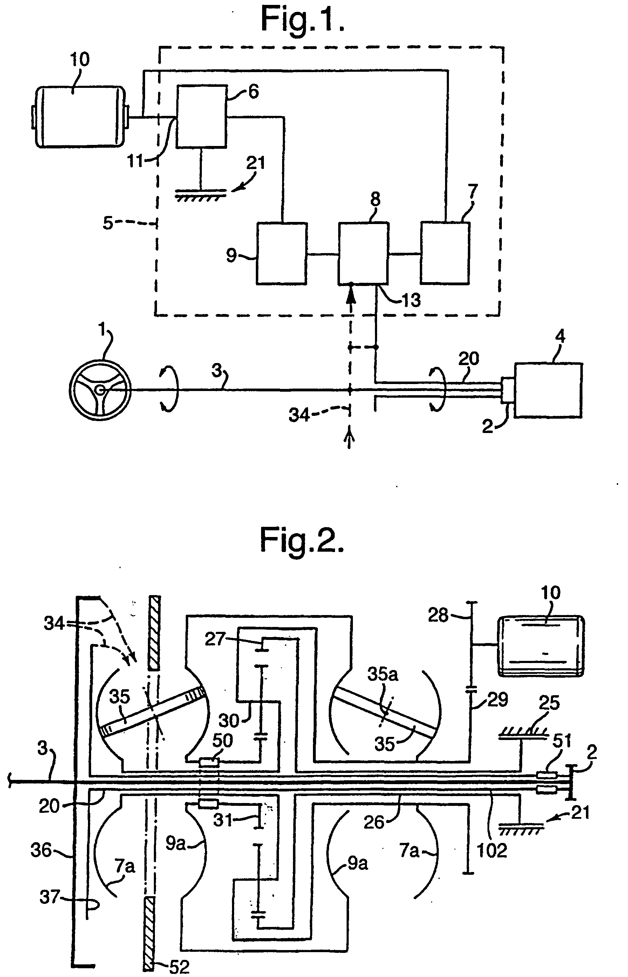

Figure 1 shows that the output of a constant speed electric motor 10 is connected both to the "input" member 7 of a variator of the variable-ratio epicyclic type and also (at 11) to one component of a typical three-part epicyclic gear set 6. The other two components of the gear set 6 are connected to the "output" member 9 of the variator and to a torque-limiting device 21 respectively. The third and intermediate member 8 of the variator produces an output 13 which constitutes one input to a pinion 2 driving a steering rack 4, the other input being from a steering wheel 1 by way of a shaft 3. The parts which make up the CVT are shown within the broken line 5 and comprise the gear set 6 and variator (7, 8 and 9), and those parts are mounted to rotate as a single assembly with a tube 20, which is coaxial with shaft 3 by way of which they are connected to pinion 2. Shaft 3 and tube 20 thus constitute a pair of concentric rotary actuating inputs to the pinion 2. Because the torque-limiting device 21 does not itself need to rotate, it can for instance be in the simple and reliable form of a stationary brake.

Figure 2 adds some detail to a version of Figure 1 in which the variator is of the toroidal-race rolling-traction type, and shows in particular how the CVT is arranged to rotate concentrically around the steering shaft 3. A stationary reaction member 25 engages, by way of the brake-type torque-limiting device 21, with a sleeve 26 carrying the annulus gear 27 of gear set 6. Motor 10 engages, by way of gears 28 and 29, both with the end discs, that is to say the input disc 7, of a toroidal-race variator and also with the planet carrier 30 of set 6. The output discs 9 of the variator are mounted in common with each other and also with the sun gear 31 of the epicyclic gear set. It should be noted both that double planets are carried by the carrier 30, in order to reverse the directions of rotation of discs 7, 9 as is necessary in a toroidal-race variator, and that gear ratios are advantageously chosen to give equal and opposite speeds of rotation to the The "intermediate member" 8 of the variator in this embodiment comprises two sets of traction-transmitting rollers and their associated carrier assemblies, one such set being disposed between one pair of thediscs 7, 9 and the second set between the other pair. One such roller of each set is shown in outline at 35. Typically there will be three such rollers in each set, disposed at equal angular intervals about the axis of shaft 3.

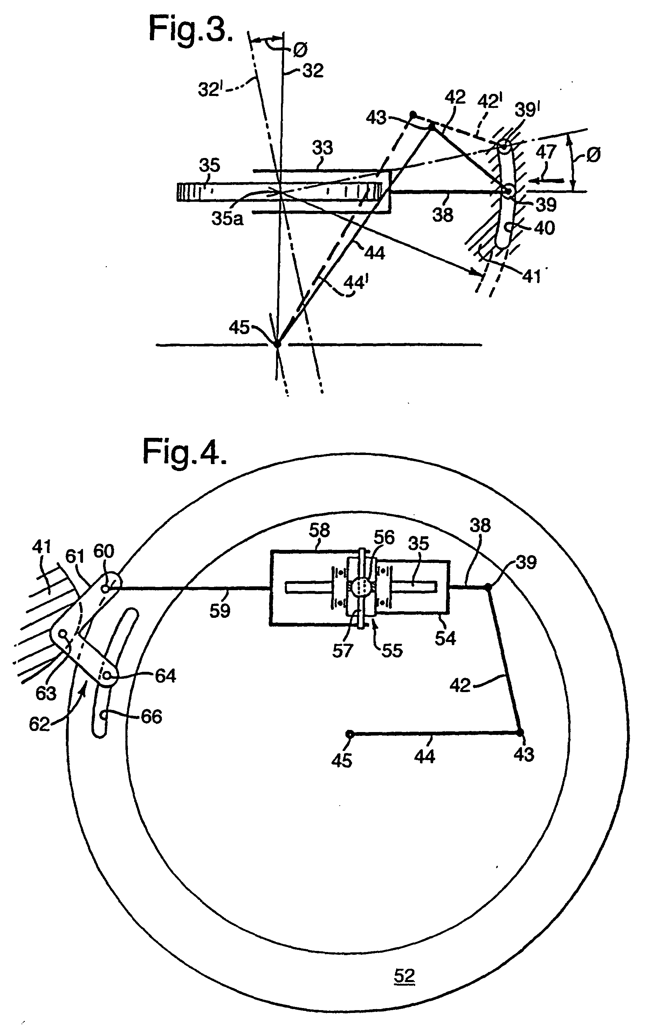

Reference 34, in Figure 2, indicates how control of the system must link the steering shaft 3, the variator intermediate member 8, and the tubular connection 20 to pinion 2. Figure 2 shows flanges 36 and 37, carried by shaft 3 and tube 20 respectively, and Figure 3 illustrates the principles behind one means by which flange 36 could be connected with the rollers 35, so as to cause the rollers to change ratio when shaft 3 exceeds a given torsional deflection (i.e. when the angular positions of shaft 3 and sleeve 20 differ by more than a given amount), and how the torque reaction experienced by the rollers can then be applied to the pinion 2 by way of tube 20, thus providing a power-steering effect by augmenting the force exerted by the driver on the steering wheel 1, so tending to reduce the difference to zero.

Three further features of Figure 2 should also be noted. First a centrifugal clutch or equivalent safety device 50, located between the sun gear 31 and the output discs 9 and operable to ensure that the sun disconnects from the discs, and the power-steering linkage is therefore disabled, should the sun gar 30 cease to rotate because, for example, the motor 10 has failed. If this happens, the operator must steer manually by way of the wheel 1, and the disabled power-steering mechanism must not interfere with his doing so. Secondly, a suitable uni-directional lost-motion connection 51 located between the pinion 2 and the flange 37/reaction plate 41. This is ensure that the power-steering mechanism works to augment the steering effort when the operator turns the wheel 1 with the intention of moving the rack 4, but allows the pinion 2 to turn the wheel 1 when it is appropriate for the steering effect to be in the reverse direction. This reverse effect occurs, for instance, due to road wheel camber when the vehicle is coming out of the bend, when without the one-way effect of the device 51 the power steering mechanism might tend to resist the restoration of the wheel 1 to the straight-ahead position. Thus item 51 effectively operates so that if the driver lets go the wheel 1, the position taken up by that wheel is determined by the road wheels. The third further feature to be noted is a ring 52 located adjacent one of the sets of rollers 35 and nominally coaxial with shaft 3, but with a central aperture 53 large enough to enable the ring to move slightly off centre without fouling the rollers. The function of this ring will be explained in connection with the embodiment of Figure 4.

Figure 3 shows one of the rollers 35, mounted to rotate about an axis 32 in a carriage 33 connected to a rod 38 carrying a ball end 39 mounted to slide in an arcuate slot 40 formed in a reaction plate 41. As is customary and well-understood in the art, the centre 35a of roller 35 is constrained to lie on the fixed "centre circle" of the torus to which the discs 7, 9 conform. The arc of slot 40 has the same centre 35a. ball end 39 is pivoted to a link 42, which is in turn pivoted at 43 to one end of a link 44, the other end of which is pivoted to flange 36 and should be visualised as rotating in a plane at right angles to the paper in Figure 2, but parallel to the paper in Figure 3 and as if point 45 coincided with the axis of shaft 3. Reaction plate 41 is attached to and lies parallel to the face of flange 37, so that plate and flange move together. With roller 35 in the position in which it is shown in Figure 3, axis 32 will coincide with the common axis of shaft 3 and tube 20. This represents the equilibrium position of the system, in which there is negligible torsional deflection in shaft 3, and in which the ratios of the CVT are chosen so that it is in the so-called "geared neutral" condition, in which the ball ends 39 lie in their mid-position within the slot 40. There is thus no torque load on the rollers 35, and therefore ball ends 39 are exerting no thrust on reaction plate 41 in the direction indicated by the arrow 47. Motor 10 is therefore exerting no torque on pinion 2 by way of flange 37 and tube 20. If however shaft 3 undergoes a torsional deflection, resulting in a corresponding angular error between shaft 3 and tube 20, this displaces links 42, 44 to the positions shown at 42' and 44' respectively, and tilts roller 35 so that it is now aligned with the ball at another position within the slot 40. In Figure 3 this is shown at 39', one limit of its range of positions within the slot. The displaced roller axis 32' now no longer intersects the axis of shaft 3 which is, of course, also the variator axis. Roller 35 therefore experiences a torque reaction, which produces a reaction force (resolvable in the direction of arrow 47) on plate 41 (i.e. on flange 37), and thus via tube 20 a torque on pinion 2 which supplements the torque being exerted on it by way of wheel 1 and shaft 3. This supplementary torque then tends to decrease to zero as the angle φ does likewise, and the ball end 39 returns to its mid-position within the slot.

In designing the embodiment illustrated in Figure 4 it was appreciated that roller reaction forces - see reference 47 in Figure 3 - are large, and that there are potential advantages, such as reduced stiction and improved driver feel, in isolating the steering input forces (applied to flange 36 in Figure 2 from the roller reaction forces which constitute the output of the power steering system and are applied to flange 37. Another feature of the resulting design is a simple mechanism serving to equalise the output forces exerted by the three rollers (35) in each set as described for Figure 2. Such equalisation occurs naturally in a modern torque-controlled automotive CVT (as described for instance in Patent Specification EP-B-0444086) where the rollers are positioned hydraulically. However, a lack of exact equalisation could be expected, and could create problems, in the simpler CVT which would be economical for a power-steering or other auxiliary drive, and in which the orientation of each roller is controlled by a direct mechanical connection between that roller and the steering wheel 1.

The first difference to note between the embodiments of Figures 3 and 4 is that in the latter Figure the linkage (38, 39, 42, 43, 44) connecting the roller carriage 33 to flange 36 (and so to shaft 3 and steering wheel 1) is now confined to the "input" side of the system and makes no contact with reaction plate 41, and that slot 40 is no longer present.

The other main difference, relating now to the "output" side of the system, is that the roller carriage is essentially in two parts. The first part 54 is similar to item 33 of Figure 3, but carries at its centre a "rose" or other articulating joint 55, the central ball 56 of which carries a rod 57 connected to a frame 58 which constitutes the second part of the carriage. A rod 59 projects from frame 58 in a manner similar to that in which rod 38 projects from frame 33. Rod 59 is pivoted at 60 to one art 61 of a bell crank 62 the vertex of which is pivotally mounted at 63 on the reaction plate 41. The other arm of bell crank 62 carries a pin 64 which slides in a slot 66 formed in the "floating" equalisation plate 52 already described with relation to Figure 2. As has already been pointed out, the single roller 35 shown in Figures 3 and 4 will be one of a set of three transmitting traction across a toroidal cavity between an input toroidal disc 7 and a corresponding output disc 9, and the three rollers will be located at equal angular intervals around the axis of the shaft 3. Nominally, therefore, the pins 64 will also lie at equal angular intervals on an imaginary circle coaxial with the rod 3, and the plate 52 will itself also be coaxial. Should the thrusts exerted (by way of carriage parts 58 and rods 59) of the three rollers not be quite equal, however, the effect of the inequality will be to move the pins 64 and thus move the plate 52 slightly off-axis until it reaches an equilibrium position, in which the relative angular setting of the three bell cranks will be such that equal turning forces will be applied to the reaction plate 41 by each of the bell cranks 62, at its respective pivotal connection 63. By forming the arcs of the slots 66 nominally concentric with shaft 3 (i.e. 45), the forces which the pins 64 exert upon the plate 52 to move it are substantially radial only, and without any circumferential component that would tend to rotate the plate.

The following potential advantage of the embodiments of the invention shown in all the Figures of drawings should be particularly noted. First that because the entire CVT rotates in common with the members from which it receives its input and to which it delivers its output, there are no problems associated with the fact that while the shaft 3 can rotate through over three revolutions, the power steering effect should come into operation when there is only a small angular error - say 2° - between shaft 3 and tube 20. Secondly, that the variator naturally rests with the rollers 35 at a 1:1 ratio when stationary, thereby avoiding any tendency to steer.

While the invention has been illustrated in the drawings only as applied to a power-assisted steering system, it will be apparent to the man skilled in the art that it is capable of general application to position servos in which power assistance may be useful to ensure that the hand-powered or other lightly-powered movements of a rotary input member are followed by a concentric but more massive rotary output member. Such applications includes a powered winch, in which the drum is power-driven to follow a manually-operated handle, or a rotary crane or machining head in which high power drives cause the cab and turret respectively to follow the movements of rotary controls that are themselves operated either directly by hand, or with only modest power assistance.

## Claims

1. A transmission having a source of power (10):
an input (29) connected to said source of power (10);
a toroidal drive (7a, 9a, 35), having a pair of input disks (7a) with at least one reaction path therebetween, a pair of output disks (9a) and a plurality of rollers (35);
a control means (34) to control the steering angle of the rollers (35);
a pair of outputs (20, 26), said outputs (20, 26) being concentric with said input (29);
a coaxial drive (27, 30, 31) having an annulus (27) and a planetary carrier (30) rotating around the axis of rotation and forming part of said at least one reaction path between said disks (7a);
said one output (20) being connected to the rollers (35) and said other output (26) connecting the annulus (27) to a stationary reaction member (25) by means of a brake-type reaction member (21).

2. The transmission of Claim 1, wherein said traction disks (7a) react axially along one reaction path therebetween and said carrier (30) forms part of said one reaction path.

3. The transmission of Claim 1, wherein said traction disks (7a) react torsionally along one reaction path, and said carrier (30) forms part of said one reaction path.

4. The transmission of Claim 1, wherein said traction disks (7a) react axially and torsionally along one reaction path, and said carrier (30) forms part of said one reaction path.

5. The transmission of Claim 1, wherein said toroidal drive (7a, 9a, 35) is a dual cavity toroidal drive, said disks (7a) are outboard traction disks which react axially and torsionally along said at least one reaction path, and said carrier (30) forms part of said at least one reaction path.

6. The transmission of Claim 1, wherein said co-axial drive (27, 30, 31) has a plurality of elements carried by said carrier (30), and said elements are operatively adapted to provide a power path between the input (29) and output (26) of said transmission.

7. A transmission as claimed in any one of claims 1 to 6 in which one of said disks (7a) is mounted for rotation with said input (29); and
the co-axial drive comprises a planetary assembly (27, 30, 31) with said rotating planetary carrier (30) which forms part of the reaction path between said disks (7a) and being interconnected between said input (29) and said toroidal drive (7a, 9a, 35), said toroidal drive (7a, 9a, 35) and said planetary assembly being operatively adapted for allowing power from said input (29) to travel back and forth through said transmission, between said input/output (29, 20) and along said substantially the same axis of rotation without the need for parallel shafting.

8. The transmission of Claim 7, wherein said toroidal drive (7a, 9a, 35) and said planetary assembly (27, 30, 31) are operatively adapted for allowing power from said input (29) to be transmitted through said toroidal drive to said planetary assembly (27, 30, 31) along the axis of rotation of said input (29), and for allowing power from said input (29) to be transmitted through said planetary assembly (27, 30, 31), then through said toroidal drive and back to said input (29) along the axis of rotation of said input (29).

9. The transmission as claimed in any of claims 1 to 8, wherein one of said traction disks (7a) is mounted to rotate with said input (29), and said carrier (30) is operatively adapted to rotate with said input (29) and the other of said traction disks (7a).

10. The transmission as claimed in any one of claims 1 to 9 in which the carrier (30) includes a hub (30) mounted to rotate with said input (29) and a support flange (31) mounted to rotate with the other of said traction disks (9a).

11. The transmission as claimed in any one of claims 1 to 10, wherein said traction disks (7a, 9a) and said planetary gear assembly (27, 30, 31) are axially held in position so that relative movement therebetween is substantially only rotational in nature.

12. The transmission of any one of the previous claims in which the planetary assembly (27, 30, 31) is situated between the two input discs (9a).

## Patentansprüche

1. Getriebe mit einer Stromquelle (10):
einem Eingang (29), der mit der genannten Stromquelle (10) verbunden ist;
einem Ringantrieb (7a, 9a, 35), der ein Paar Eingangsscheiben (7a) mit wenigstens einem Reaktionsweg zwischen denselben, ein Paar Ausgangsscheiben (9a) und eine Mehrzahl von Rollen (35) aufweist;
einem Steuermittel (34) zum Steuern des Lenkwinkels der Rollen (35);
einem Paar Ausgängen (20, 26), wobei die genannten Ausgänge (20, 26) konzentrisch mit dem genannten Eingang (29) sind;
einem koaxialen Antrieb (27, 30, 31) mit einer Ringspule (27) und einem Planetenträger (30), der um die Drehachse rotiert und einen Teil des genannten wenigstens einen Reaktionswegs zwischen den genannten Scheiben (7a) bildet;
wobei der genannte eine Ausgang (20) mit den Rollen (35) verbunden ist und der genannte andere Ausgang (26) die Ringspule (27) mit einem stationären Reaktionselement (25) mittels eines Reaktionselements (21) vom Bremstyp verbindet.

2. Getriebe nach Anspruch 1, bei dem die genannten Traktionsscheiben (7a) axial entlang eines Reaktionswegs zwischen denselben reagieren und der genannte Träger (30) einen Teil des genannten einen Reaktionswegs bildet.

3. Getriebe nach Anspruch 1, bei dem die genannten Traktionsscheiben (7a) torsionsmäßig entlang eines Reaktionswegs reagieren und der genannte Träger (30) einen Teil des genannten einen Reaktionswegs bildet.

4. Getriebe nach Anspruch 1, bei dem die genannten Traktionsscheiben (7a) axial und torsionsmäßig entlang eines Reaktionswegs reagieren, und der genannte Träger (30) einen Teil des genannten einen Reaktionswegs bildet.

5. Getriebe nach Anspruch 1, bei dem der genannte Ringantrieb (7a, 9a, 35) ein Doppelhohlraum-Ringantrieb ist, wobei die genannten Scheiben (7a) äußere Traktionsscheiben sind, die axial und torsionsmäßig entlang des genannten wenigstens einen Reaktionswegs reagieren, und der genannte Träger (30) einen Teil des genannten wenigstens einen Reaktionswegs bildet.

6. Getriebe nach Anspruch 1, bei dem der genannte koaxiale Antrieb (27, 30, 31) eine Mehrzahl von durch den genannten Träger (30) gehaltenen Elementen aufweist, und die genannten Elemente operativ ausgelegt sind, um einen Stromweg zwischen dem Eingang (29) und dem Ausgang (26) des genannten Getriebes zu liefern.

7. Getriebe nach einem der Ansprüche 1 bis 6, bei dem eine der genannten Scheiben (7a) für Drehung mit dem genannten Eingang (29) angebracht ist; und
der koaxiale Antrieb eine Planetenbaugruppe (27, 30, 31) mit dem genannten rotierenden Planetenträger (30) aufweist, der einen Teil des Reaktionswegs zwischen den genannten Scheiben (7a) bildet und zwischen dem genannten Eingang (29) und dem genannten Ringantrieb (7a, 9a, 35) verbunden ist, wobei der genannte Ringantrieb (7a, 9a, 35) und die genannte Planetenbaugruppe operativ ausgelegt sind, damit Strom von dem genannten Eingang (29) durch das genannte Getriebe hin und her, zwischen dem genannten Eingang/Ausgang (29, 20) und entlang der genannten im wesentlichen gleichen Drehachse ohne die Notwendigkeit paralleler Wellenleitung fließen kann.

8. Getriebe nach Anspruch 7, bei dem der genannte Ringantrieb (7a, 9a, 35) und die genannte Planetenbaugruppe (27, 30, 31) operativ ausgelegt sind, um Strom von dem genannten Eingang (29) durch den genannten Ringantrieb zu der genannten Planetenbaugruppe (27, 30, 31) entlang der Drehachse des genannten Eingangs (29) fließen zu lassen, und Übertragung von Strom aus dem genannten Eingang (29) durch die genannte Planetenbaugruppe (27, 30, 31), anschließend durch den genannten Ringantrieb und zurück zu dem genannten Eingang (29) entlang der Drehachse des genannten Eingangs (29) zuzulassen.

9. Getriebe nach einem der Ansprüche 1 bis 8, bei dem eine der genannten Traktionsscheiben (7a) für Drehung mit dem genannten Eingang (29) angebracht ist, und der genannte Träger (30) operativ ausgelegt ist, um mit dem genannten Eingang (29) und den anderen der genannten Traktionsscheiben (7a) zu rotieren.

10. Getriebe nach einem der Ansprüche 1 bis 9, bei dem der Träger (30) eine Nabe (30), die für Drehung mit dem genannten Eingang (29) angebracht ist, und einen Halteflansch (31) aufweist, der für Drehung mit der anderen der genannten Traktionsscheiben (9a) angebracht ist.

11. Getriebe nach einem der Ansprüche 1 bis 10, bei dem die genannten Traktionsscheiben (7a, 9a) und die genannte Planetengetriebebaugruppe (27, 30, 31) axial in richtiger Position gehalten werden, so dass relative Bewegung zwischen denselben im wesentlichen nur drehender Natur ist.

12. Getriebe nach einem der vorhergehenden Ansprüche, bei dem die Planetenbaugruppe (27, 30, 31) zwischen den beiden Eingangsscheiben (9a) angeordnet ist.

## Revendications

1. Transmission possédant une source de propulsion (10):
un organe d'entrée (29) relié à ladite source de propulsion (10);
un entraînement toroïdal (7a, 9a, 35) ayant une paire de disques d'entrée (7a) avec au moins un trajet de réaction entre eux, une paire de disques de sortie (9a) et une pluralité de rouleaux (35);
un moyen de contrôle (34) destiné à contrôler l'angle de braquage des rouleaux (35);
une paire d'organes de sortie (20, 26), lesdits organes de sortie (20, 26) étant concentriques avec ledit organe d'entrée (29) ;
un entraînement coaxial (27, 30, 31) possédant une couronne (27) et un porte-satellites (30) tournant autour de l'axe de rotation et faisant partie dudit au moins un trajet de réaction entre lesdits disques (7a) ;
ledit un organe de sortie (20) étant relié aux rouleaux (35) et ledit autre organe de sortie (26) raccordant la couronne (27) à un élément de réaction immobile (25) grâce à un élément de réaction de type frein (21).

2. Transmission de la revendication 1, dans laquelle lesdits disques de traction (7a) réagissent axialement le long d'un trajet de réaction entre eux, alors que ledit porte-satellites (30) fait partie dudit un trajet de réaction.

3. Transmission de la revendication 1, dans laquelle lesdits disques de traction (7a) réagissent par torsion le long d'un trajet de réaction, alors que ledit porte-satellites (30) fait partie dudit un trajet de réaction.

4. Transmission de la revendication 1, dans laquelle lesdits disques de traction (7a) réagissent axialement et par torsion le long d'un trajet de réaction, alors que ledit porte-satellites (30) fait partie dudit un trajet de réaction.

5. Transmission de la revendication 1, dans laquelle l'entraînement toroïdal (7a, 9a, 35) est un entraînement toroïdal à double cavité, lesdits disques (7a) sont des disques à traction externe qui réagissent axialement et par torsion le long dudit au moins un trajet de réaction, alors que ledit porte-satellites (30) fait partie dudit au moins un trajet de réaction.

6. Transmission de la revendication 1, dans laquelle l'entraînement coaxial (27, 30, 31) possède une pluralité d'éléments qui sont portés par ledit porte-satellites (30) et lesdits éléments sont adaptés, en fonctionnement, de façon à offrir un trajet de propulsion entre l'organe d'entrée (29) et l'organe de sortie (26) de ladite transmission.

7. Transmission selon l'une quelconque des revendications 1 à 6, dans laquelle l'un desdits disques (7a) est monté en vue d'une rotation avec ledit organe d'entrée (29); et
l'entraînement coaxial comprend un ensemble planétaire (27, 30, 31), avec ledit porte-satellites tournant (30) qui fait partie du trajet de réaction entre lesdits disques (7a), et étant interconnecté entre ledit organe d'entrée (29) et ledit entraînement toroïdal (7a, 9a, 35), ledit entraînement toroïdal (7a, 9a, 35) et ledit ensemble planétaire étant adaptés, en fonctionnement, pour permettre à la propulsion fournie par ledit organe d'entrée (29) d'effectuer un mouvement de va-et-vient par l'intermédiaire de ladite transmission, entre ledit organe d'entrée/de sortie (29, 20) et le long dudit axe de rotation essentiellement identique, sans qu'il soit nécessaire de prévoir une ligne d'arbres parallèles.

8. Transmission de la revendication 7, dans laquelle ledit entraînement toroïdal (7a, 9a, 35) et ledit ensemble planétaire (27, 30, 31) sont adaptés, en fonctionnement, pour permettre à la propulsion fournie par ledit organe d'entrée (29) d'être transmise audit ensemble planétaire (27, 30, 31) par l'intermédiaire dudit entraînement toroïdal, le long de l'axe de rotation dudit organe d'entrée (29) et pour permettre à la propulsion fournie par ledit organe d'entrée (29) d'être transmise par ledit ensemble planétaire (27, 30, 31), puis par ledit entraînement toroïdal et de revenir audit organe d'entrée (29) le long de l'axe de rotation dudit organe d'entrée (29).

9. Transmission selon l'une quelconque des revendications 1 à 8, dans laquelle l'un desdits disques de traction (7a) est monté pour tourner avec ledit organe d'entrée (29), et ledit porte-satellites (30) est adapté, en fonctionnement, pour tourner avec ledit organe d'entrée (29) et l'autre desdits disques de traction (7a).

10. Transmission selon l'une quelconque des revendications 1 à 9, dans laquelle le porte-satellites (30) inclut un moyeu (30) qui est monté de façon à tourner avec ledit organe d'entrée (29) et un flasque de support (31) qui est monté de façon à tourner avec l'autre desdits disques de traction (9a).

11. Transmission selon l'une quelconque des revendications 1 à 10, dans laquelle lesdits disques de traction (7a, 9a) et ledit ensemble à engrenages planétaires (27, 30, 31) sont maintenus axialement en position pour que le mouvement relatif entre eux soit de nature essentiellement rotationnelle seulement.

12. Transmission selon l'une quelconque des revendications précédentes, dans laquelle l'ensemble planétaire (27, 30, 31) est situé entre les deux disques d'entrée (9a).
